# EUROPEAN PATENT APPLICATION

(11) **EP 3 832 958 A1**
(43) Date of publication of application: **09.06.2021**
(21) Application number: 18934864.2
(22) Date of filing: 30.09.2018
(51) Int. Cl.: H04L 12/58

(54) **COMMUNICATION METHOD AND APPARATUS, AND COMMUNICATION DEVICE**

(71) Applicant: GUANGDONG OPPO MOBILE TELECOMMUNICATIONS CORP., LTD., Dongguan Guangdong 523860 (CN)
(72) Inventor: LIU, Jianhua, Dongguan, Guangdong 523860 (CN)
(74) Representative: Penza, Giancarlo
(86) International application number: PCT/CN2018/109099
(87) International publication number: WO 2020/062246

(57) **Abstract**

Provided by the embodiments of the present application are a communication method and apparatus, and a communication device; the method comprises: a network receiving first data sent by a first terminal, and determining receiving end information of the first data; according to the receiving end information of the first data, the network determining at least one terminal, and sending the first data to the at least one terminal.

## Description

### Technical Field

Embodiments of the present application relates to the technical field of mobile communication, in particular to a communication method and a communication apparatus, and a communication device.

### Background

In LTE (Long Term Evolution) and NR (New Radio) systems, a public network system, that is, a network based on PLMN (Public Land Mobile Network), is usually deployed. However, in some scenarios, such as in office scenarios, in home scenarios and in factories, in order to manage more effectively and safely, a local user or manager usually lays out a local network. When members in a local network group communicate with each other, a point-to-point communication or point-to-multipoint communication may be adopted. How to realize point-to-multipoint communication is a problem to be solved.

### Summary

Embodiments of the present application provide a communication method, a communication apparatus and a communication device.

A communication method provided by an embodiment of the present application includes: receiving, by a network, first data sent by a first terminal, and determining receiving end information of the first data; and determining, by the network, at least one terminal according to the receiving end information of the first data, and sending the first data to the at least one terminal.

A communication apparatus provided by an embodiment of the present application includes a receiving unit, a determination unit and a sending unit. The receiving unit, configured to receive first data sent by a first terminal; the determination unit, configured to determine receiving end information of the first data; and, the sending unit, configured to determine at least one terminal according to the receiving end information of the first data and send the first data to the at least one terminal.

A communication device provided by an embodiment of the present application includes a processor and a memory. The memory is configured to store a computer program, and the processor is configured to call and run the computer program stored in the memory to execute the communication method described above.

A chip provided by an embodiment of this application is used to realize the communication method described above.

Specifically, the chip includes a processor configured to call and run a computer program from a memory and a device disposed with the chip executes the communication method described above.

An embodiment of the present application provides a computer readable storage medium configured to store a computer program, and the computer program enables a computer to execute the communication method described above.

An embodiment of the present application provides a computer program product including computer program instructions, and the computer program instructions enable a computer to execute the communication method described above.

An embodiment of the present application provides a computer program that, when running on a computer, enables the computer to execute the communication method described above.

According to the technical solution, for a point-to-multipoint communication between one terminal and members in one group, after the terminal sends data to a network side, the network side determines receiving end information of the data, and determines at least one terminal based on the receiving end information corresponding to the data, thereby realizing the transmission of the data to each member in at least one terminal.

### Brief Description of Drawings

The drawings described herein are used to provide a further understanding of the present application and form a part of the present application. Illustrative examples of the present application and the description thereof are used to explain the present application and do not constitute improper limitation of the present application. In the drawings:
FIG. 1 is a schematic diagram of an architecture of a communication system provided by an embodiment of the present application;
FIG. 2 is a schematic flowchart of a communication method provided by an embodiment of the present application;
FIG. 3 is a first schematic diagram of point-to-multipoint data routing provided by an embodiment of the present application;
FIG. 4 is a second schematic diagram of point-to-multipoint data routing provided by an embodiment of the present application;
FIG. 5 is a schematic structural composition diagram of a communication apparatus provided by an embodiment of the present application;
FIG. 6 is a schematic diagram of a structure of a communication device provided by an embodiment of the present application.
FIG. 7 is a schematic diagram of a structure of a chip of an embodiment of the present application.
FIG. 8 is a schematic block diagram of a communication system provided by an embodiment of the present application.

### Detailed Description

The technical solution in embodiments of the present application will be described below with reference to the drawings in embodiments of the present application. It is apparent that the embodiments described are just some embodiments of the present application, but not all embodiments of the present application. According to the embodiments of the present application, all other embodiments achieved by a person of ordinary skill in the art without paying an inventive effort are within the protection scope of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system, or a 5G system.

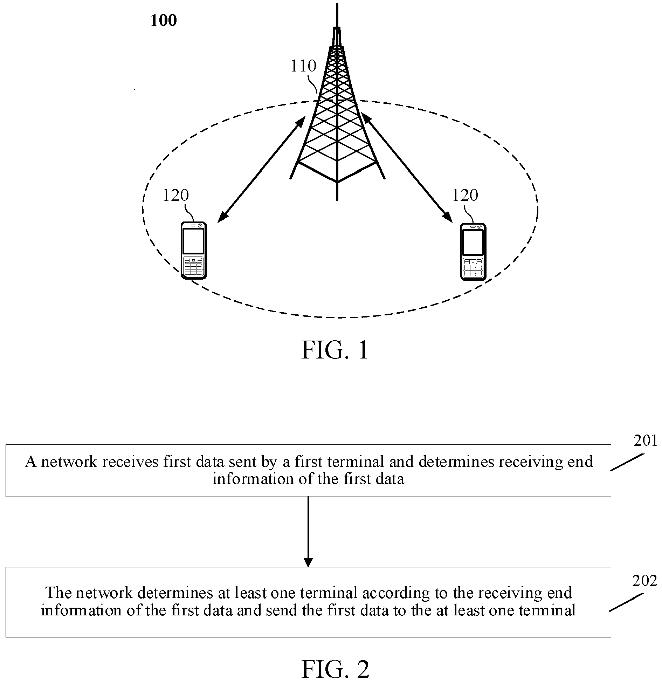

Illustratively, a communication system 100 applied in an embodiment of the present application is shown in FIG. 1. The communication system 100 may include a network device 110, and the network device 110 may be a device that communicates with a terminal 120 (or referred to as a communication terminal, or a terminal). The network device 110 may provide communication coverage for a specific geographical area, and may communicate with terminals located within the coverage area. Optionally, the network device 110 may be a Base Transceiver Station (BTS) in a GSM system or CDMA system, a NodeB (NB) in a WCDMA system, an Evolutional Node B (eNB or eNodeB) in a LTE system, or a radio controller in a Cloud Radio Access Network (CRAN), or the network device may be a network side device in a mobile switch center, a relay station, an access point, a vehicle-mounted device, a wearable device, a hub, a switch, a bridge, a router, or a 5G network, or a network device in a future evolved Public Land Mobile Network (PLMN), etc.

The communication system 100 also includes at least one terminal 120 located within the coverage area of the network device 110. As used herein, the term "terminal" includes, but not limited to, a device configured to connect via a wired circuit, for example, via a Public Switched Telephone Network (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a Digital Video Broadcasting-Handheld (DVB-H) network, a satellite network, and an AM-FM broadcast transmitter; and/or an apparatus, of another communication terminal, configured to receive/send a communication signal; and/or an Internet of Things (IoT) device. A terminal configured to communicate via a wireless interface may be referred to as a "wireless communication terminal", a "wireless terminal" or a "mobile terminal". Examples of the mobile terminal include, but not limited to, a satellite or cellular telephone, a Personal Communication System (PCS) terminal capable of combining with a cellular wireless telephone and data processing, faxing, and data communication abilities, a Personal Digital Assistant (PDA) that may include a radio telephone, a pager, an internet/intranet access, a Web browser, a memo pad, a calendar, and/or a Global Positioning System (GPS) receiver, and a conventional laptop and/or palmtop receiver or another electronic apparatus including a radio telephone transceiver. The terminal may be referred to an access terminal, User Equipment (UE), a subscriber unit, a subscriber station, a mobile station, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing device connected to a wireless modem, a vehicle-mounted device, a wearable device, a terminal in a future 5G network, or a terminal in a future evolved Public Land Mobile Network (PLMN), or the like.

Optionally, a Device to Device (D2D) communication may be performed between the terminals 120.

Optionally, the 5G system or 5G network may be referred to as a New Radio (NR) system or a NR network.

FIG. 1 exemplifies one network device and two terminals. Optionally, the communication system 100 may include multiple network devices, and another quantity of terminals may be included within a coverage area of each network device, which is not limited in the embodiments of the present application.

Optionally, the communication system 100 may include other network entities such as a network controller, and a mobile management entity, which is not limited in the embodiments of the present application..

It should be understood that, a device with a communication function in a network/system in the embodiment of the present application may be referred to as a communication device. Taking the communication system 100 shown in FIG. 1 as an example, the communication device may include a network device 110 and a terminal 120 which have communication functions, and the network device 110 and the terminal 120 may be the specific devices described above, which will not be described here again. The communication device may also include other devices in the communication system 100, such as network controllers, mobile management entities, and other network entities, which is not limited in the embodiments of the present application.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

FIG. 2 is a schematic flowchart of a communication method provided by an embodiment of the present application. As shown in FIG. 2, the communication method includes the following acts 201-202.

In act 201: a network receives first data sent by a first terminal and determines receiving end information of the first data.

Specifically, the network receives the first data sent by the first terminal and determines group information of the first data.

In act 202: the network determines at least one terminal according to the receiving end information of the first data, and sends the first data to the at least one terminal.

Specifically, the network determines a target group according to group information of the first data, and sends the first data to at least one terminal in the target group.

In an embodiment of the present application, the first terminal may be a terminal in the target group or a terminal outside the target group. For example, the target group includes UE1, UE2 and UE3, and the UE1 sends the first data to the UE2 and UE3. For another example, the target group includes UE2 and UE3, UE1 is a terminal outside the target group, and the UE1 sends the first data to the UE2 and UE3.

In an embodiment of the present application, a role of a Network (NW) is to receive the first data sent by the first terminal and forward the first data to other terminals in the target group.

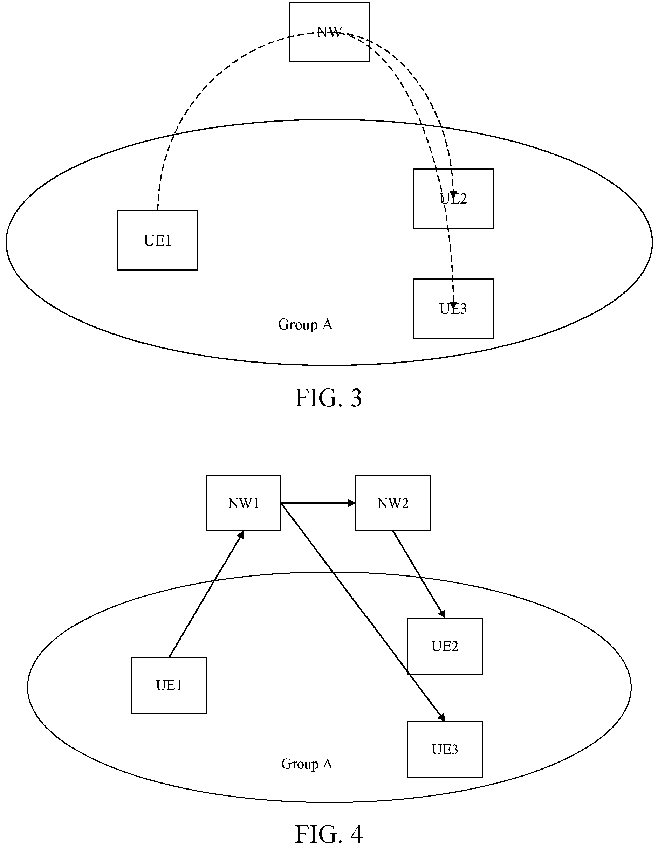

For example, referring to FIG. 3, the UE1 sends data to members of Group A, and the UE2 and UE3 are the members of Group A. The UE2 and UE3 simultaneously receive the data sent by the UE1. The UE1 sends the data to a network side (NW), and the network side determines the Group A according to group information of the data sent by the UE1, and sends the data to the members in the Group A.

In an embodiment of the present application, the network side determines the group information of the first data in the following modes:
Mode One: the first data is transmitted on a dedicated connection corresponding to the at least one terminal; the receiving end information of the first data is determined based on a dedicated connection for transmitting the first data. Specifically, the first data is transmitted on a group-dedicated connection corresponding to the target group; the network determines the group information of the first data based on the group-dedicated connection for transmitting the first data.

Here, the group-dedicated connection includes at least one of the following: a dedicated PDN (Public Data Network) connection, a dedicated PDU (Protocol Data Unit) session, a QoS (Quality of Service) flow, a dedicated bearer, a dedicated logical channel and a dedicated logical channel group.

Particularly, the group-dedicated connection includes at least one of the following: a group-dedicated PDN connection, a group-dedicated PDU session, a group-dedicated QoS flow, a group-dedicated bearer, a group-dedicated logical channel and a group-dedicated logical channel group.

Mode two: the first data carries the identification information and/or address information corresponding to the at least one terminal; the receiving end information of the first data is determined based on the identification information and/or the address information carried in the first data. Specifically, the first data carries the identification information and/or address information of the target group; and the network determines the group information of the first data based on the identification information and/or the address information carried in the first data.

When the first data carries address information of the target group, the address information of the target group is encapsulated as a target address in the first data.

In an embodiment of the present application, the network includes an Access Network (AN) and a Core Network (CN), under this network architecture, the mode one and mode two may be used in combination.

Combination mode one: the first data transmitted between the terminal and the access network is transmitted on a first dedicated connection, and the first dedicated connection is used for the access network to determine the receiving end information of the first data; the first data transmitted between the access network and the core network carries the identification information and/or address information corresponding to the at least one terminal, and the identification information and/or address information is used for the core network to determine the receiving end information of the first data. Specifically, the first data transmitted between the terminal and the access network is transmitted on a first group-dedicated connection, which is used by the access network to determine the group information of the first data; the first data transmitted between the access network and the core network carries the identification information and/or address information of the target group, and the identification information and/or address information is used for the core network to determine the group information of the first data.

A channel between the access network and the core network supports multiple groups sharing.

It should be noted that the channels involved in an embodiments of the present application may also be called data links or connections.

For example, the UE1 sends the data to the AN on a group-dedicated connection 1, the AN determines the group information of the target group based on the group-dedicated connection 1 of the received data, encapsulates the identification information 1 and/or address information 1 of the target group into the data, and then sends the data to the CN through a channel between the AN and CN, and the CN determines the group information of the target group based on the identification information 1 and/or address information 1 carried in the received data and sends the data to each member of the target group.

Combination mode two: the first data transmitted between the terminal and the access network carries the identification information and/or address information corresponding to the at least one terminal, and the identification information and/or address information is used by the access network to determine the receiving end information of the first data; the first data transmitted between the access network and the core network is transmitted on a second dedicated connection, which is used for the core network to determine the receiving end information of the first data. Specifically, the first data transmitted between the terminal and the access network carries the identification information and/or address information of the target group, and the identification information and/or address information is used for the access network to determine the group information of the first data; the first data transmitted between the access network and the core network is transmitted on a second group-dedicated connection, which is used for the core network to determine the group information of the first data.

For example, the UE1 encapsulates the identification information 1 and/or address information 1 of the target group in the data sent to the AN. After receiving the data sent by the UE1, the AN determines the group information of the target group based on the identification information 1 and/or address information 1 in the data, and then sends the data to the CN through a group-dedicated connection 2, where the group-dedicated connection 2 has a mapping relationship with the target group, and the CN determines the group information of the target group based on the received data.

Combination mode three: the first data transmitted between the terminal and the access network is transmitted on the first dedicated connection, and the first dedicated connection is used for the access network to determine the receiving end information of the first data; the first data transmitted between the access network and the core network is transmitted on the second dedicated connection, and the second dedicate connection is used for the core network to determine the receiving end information of the first data. Specifically, the first data transmitted between the terminal and the access network is transmitted on the first group-dedicated connection, and the first group-dedicated connection is used by the access network to determine the group information of the first data; the first data transmitted between the access network and the core network is transmitted on the second group-dedicated connection, the second group-dedicated connection is used for the core network to determine the group information of the first data.

Combination mode four: the first data transmitted between the terminal and the access network carries the identification information and/or address information corresponding to the at least one terminal, and the identification information and/or address information is used for the access network to determine the receiving end information of the first data; the first data transmitted between the access network and the core network carries the identification information and/or address information corresponding to the at least one terminal, and the identification information and/or address information is used for the core network to determine the receiving end information of the first data. Specifically, the first data transmitted between the terminal and the access network carries the identification information and/or address information of the target group, and the identification information and/or address information is used for the access network to determine the group information of the first data; the first data transmitted between the access network and the core network carries the identification information and/or address information of the target group, and the identification information and/or address information is used for the core network to determine the group information of the first data.

The above solution is for a network receiving side, and for a network sending side, the network side sends the first data to the target group in the following modes:
Mode one: sending the first data to the at least one terminal on a dedicated connection corresponding to the at least one terminal. Specifically, the first data is sent to at least one terminal in the target group on the group-dedicated connection corresponding to the target group.

The dedicated connection includes at least one of the following: a dedicated PDN connection, a dedicated PDU session, a dedicated QoS flow, a dedicated bearer, a dedicated logical channel and a dedicated logical channel group. Specially, the group-dedicated connection includes at least one of the following: a group-dedicated PDN connection, a group-dedicated PDU session, a group-dedicated QoS flow, a group-dedicated bearer, a group-dedicated logical channel and a group-dedicated logical channel group.

Mode 2: the first data carries the identification information and/or address information corresponding to the at least one terminal and is sent to the at least one terminal. Specifically, the first data carries the identification information and/or address information of the target group and is sent to at least one terminal in the target group.

Similarly, the network includes an AN and a CN. Under this network architecture, the above-mentioned mode one and mode two may be used in combination.

Combination mode one: the first data transmitted between the core network and the access network is transmitted on a second dedicated connection, and the second dedicated connection is used for the access network to determine the receiving end information of the first data; the first data transmitted between the access network and the at least one terminal carries the identification information and/or address information corresponding to the at least one terminal, and the identification information and/or address information is used by the at least one terminal to determine the receiving end information of the first data. Specifically, the first data transmitted between the core network and the access network is transmitted on the second group-dedicated connection, the second group-dedicated connection is used by the access network to determine the group information of the first data; the first data transmitted between the access network and at least one terminal in the target group carries the identification information and/or address information of the target group, the identification information and/or address information is used for at least one terminal in the target group to determine the group information of the first data.

Combination mode two: the first data transmitted between the core network and the access network carries the identification information and/or address information corresponding to the at least one terminal, and the identification information and/or address information is used for the access network to determine the receiving end information of the first data; the first data transmitted between the access network and the at least one terminal is transmitted on the first dedicated connection, and the first dedicated connection is used for the at least one terminal to determine the receiving end information of the first data. Specifically, the first data transmitted between the core network and the access network carries identification information and/or address information of the target group, and the identification information and/or address information is used for the access network to determine the group information of the first data; the first data transmitted between the access network and at least one terminal in the target group is transmitted on a first group-dedicated connection, and the first group-dedicated connection is used for at least one terminal in the target group to determine the group information of the first data.

Combination mode three: the first data transmitted between the core network and the access network is transmitted on the second dedicated connection, and the second dedicated connection is used for the access network to determine the receiving end information of the first data; the first data transmitted between the access network and the at least one terminal is transmitted on the first dedicated connection, and the first dedicated connection is used for the at least one terminal to determine the receiving end information of the first data. Specifically, the first data transmitted between the core network and the access network is transmitted on the second group-dedicated connection, the second group-dedicated connection is used by the access network to determine the group information of the first data; the first data transmitted between the access network and at least one terminal in the target group is transmitted on the first group-dedicated connection, the first group-dedicated connection is used for at least one terminal in the target group to determine the group information of the first data.

Combination mode four: the first data transmitted between the core network and the access network carries the identification information and/or address information corresponding to the at least one terminal, and the identification information and/or address information is used for the access network to determine the receiving end information of the first data; the first data transmitted between the access network and the at least one terminal carries the identification information and/or address information corresponding to the at least one terminal, and the identification information and/or address information is used by the at least one terminal to determine the receiving end information of the first data. Specifically, the first data transmitted between the core network and the access network carries the identification information and/or address information of the target group, and the identification information and/or address information is used for the access network to determine the group information of the first data; the first data transmitted between the access network and at least one terminal in the target group carries the identification information and/or address information of the target group, the identification information and/or address information is used for at least one terminal in the target group to determine the group information of the first data.

In the solution described above, the access network may identify the group information of the first data either based on the group-dedicated connection or the identification information and/or address information of the target group carried in the first data. An embodiment of the present application also provides a mode that the group information is transparent to the access network side, and the group information is directly identified through the core network side, specifically: on the network receiving side, the first data transmitted between the terminal and the core network is transmitted on a third dedicated connection, and the third dedicated connection is used for the core network to determine the receiving side information of the first data; or, the first data transmitted between the terminal and the core network carries the identification information and/or address information corresponding to the at least one terminal, wherein the identification information and/or address information is used for the core network to determine the receiving end information of the first data, and the identification information and/or address information is not processed at the access network side. Specifically, the first data transmitted between the terminal and the core network is transmitted on a third group-dedicated connection, and the third group-dedicated connection is used for the core network to determine the group information of the first data; or, the first data transmitted between the terminal and the core network carries the identification information and/or address information of the target group, the identification information and/or address information is used for the core network to determine the group information of the first data, wherein the identification information and/or address information is not processed at the access network side.

On the network sending side, the first data transmitted between the core network and the at least one terminal is transmitted on the third dedicated connection, and the third dedicated connection is used for the at least one terminal to determine the receiving end information of the first data; or, the first data transmitted between the core network and the at least one terminal carries the identification information and/or address information corresponding to the at least one terminal, the identification information and/or address information is used by the at least one terminal to determine the receiving end information of the first data, wherein the identification information and/or address information is not processed at the access network side. Specifically, the first data transmitted between the core network and at least one terminal in the target group is transmitted on the third group-dedicated connection, and the third group-dedicated connection is used for at least one terminal in the target group to determine the group information of the first data; or, the first data transmitted between the core network and at least one terminal in the target group carries the identification information and/or address information of the target group, the identification information and/or address information is used for at least one terminal in the target group to determine the group information of the first data, wherein the identification information and/or address information is not processed at the access network side.

In an embodiment of present application, the network determines routing information of the first data according to the first configuration information. For example, after receiving the data sent by the UE1, the network identifies the group information (Group A) of the data, and identifies the member information in the group according to the first configuration information (which may be pre-configured information), for example, it identifies that the group members include UE2 and UE3. The first configuration information may be realized in the following mode: 1) the first configuration information includes information of each terminal in the at least one terminal. Specifically, the first configuration information includes the information of each terminal in the target group.

For example, the first configuration information configures the group member information of the target group, for example, Group A includes the UE2 and UE3.

2) The first configuration information includes a first routing relationship, and the first routing relationship includes a mapping relationship between a receiving channel and a sending channel of the first data.

In the following embodiments of the present application, descriptions involving at least one terminal may be understood as descriptions for the target group.

Further, when the network is a service network of both the first terminal and a terminal in the target group, the receiving channel of the first data is a channel between the first terminal and the network, and the sending channel of the first data is a channel between the network and at least one terminal in the target group.

Further, the network includes a first network and a second network, wherein the first network is the service network of the first terminal and the second network is the service network of the at least one terminal in the target group.

For the first network, the receiving channel of the first data is a channel between the first terminal and the first network, and the sending channel of the first data is a channel between the first network and the second network.

For the second network, the receiving channel of the first data is a channel between the first network and the second network, and the sending channel of the first data is a channel between the second network and at least one terminal in the target group.

For example, the first configuration information configures the mapping relationship between channels on the receiving side and channels on the sending side of the network side. For example, the network side receives the data sent by the UE1 on a data channel 1, and the data channel 1 on the receiving side corresponds to data channel 2 and 3 on the sending side, where the receiving end of the data channel 2 is the UE2 and the receiving end of data channel 3 is the UE3.

Another example: Table 1 shows the first routing relationship. It can be seen from Table 1 that after receiving the data sent by the UE1, the network side may determine that the receiving ends are the UE2 and UE3.

**Table 1**

| Identification | Address information of received data | Corresponding data path information to be sent | Next hop data encapsulation |
|---|---|---|---|
| 1. | Destination IP address 1 | IP data channel of UE2 and IP data channel of UE3 | A source address is the address information of the UE1, or the address information corresponding to UE1 on network 1, or the address information corresponding to Group A on the network 1 or the address information corresponding to the combination of UE1 and group A on network 1. A target address may be the address information of the UE2 or UE3, or the address information of Group A. |
| 2. | Destination MAC address 1 | Ethernet data channel of UE2 and Ethernet data channel of UE 3 | A source address is the address information of the UE1, or the address information corresponding to UE1 on network 1, or the address information corresponding to Group A on the network 1 or the address information corresponding to the combination of UE1 and group A on network 1. A target address may be the address information of the UE2 or UE3, or the address information of Group A. |
| 3. | Destination address information | Channel corresponding to a next hop network node | A source address is the address information of the UE1, or the address information corresponding to UE1 on network 1, or the address information corresponding to Group A on the network 1 or the address information corresponding to the combination of UE1 and group A on network 1. A target address may be the address information of the UE2 or UE3, or the address information of Group A. |

Particularly, when there are two networks, referring to FIG. 4, the networks include NW1 and NW2, where a next hop of the NW1 is the NW2, the NW1 finds the next hop NW2 according to the configured group information, and the NW2 determines to send the data to the UE2 according to the group information of the received data, in the same way as the NW 1.

In an embodiment of the present application, after receiving the first data, each terminal in the target group determines the group information of the first data based on at least one of the following information: the identification information of the target group carried in the first data; the group-dedicated connection for transmitting the first data; the target address information in the first data, wherein the target address information is address information of the target group; and the source address information in the first data, which represents the group channel information of the target group.

For example, the receiving end UE2 or UE3 determines the group information of the received data according to the following information: the identification information and/or address information of the target group carried in the data; the Group-dedicated connection information for transmitting data, for example, the group-dedicated connection may be the group-dedicated PDN connection, the group-dedicated PDU Session, the group-dedicated QoS flow, the group-dedicated bearer, the group-dedicated logical channel or the group-dedicated logical channel group, the network may identify the information of the target group according to receiving the group-dedicated connection of the data; and the source address information in the data, which represents the group channel information.

In an embodiment of the present application, after receiving the first data, each terminal in the target group determines the sending end information of the first data based on at least one of the following information: the source address information of the first data, wherein the source address information is the address information of the first terminal; and the group information in the first data, wherein the sending end of the first data is fixed in the group information.

For example, the receiving end UE2 or UE3 determines the sending end information of the data according to the following information: the source address in the data, which is the address information of the UE1; and the information of the group in the data, if the data sender of this group is fixed.

In the solution described above, the NW1 and NW2 may be user plane entities in the core network, such as User Plane Function (UPF), or control plane entities, such as access and mobility management function (AMF).

In the solution described above, the group-dedicated connection is configured in a process of establishing the target group or the group-dedicated connection. Further, the configuration of the group-dedicated connection includes the group-dedicated connection configuration between the terminal and the access network, and/or the group-dedicated connection configuration between the core network and the access network, and/or the group-dedicated connection configuration between the core networks.

In an implementation, the configuration of the group-dedicated connection includes at least one of the following information: the group-dedicated PDN connection, the group-dedicated PDU session, the group-dedicated QoS flow, the group-dedicated bearer, and the group-dedicated logical channel group.

Optionally, in the process of establishing the target group, dedicated identification information and/or address information are also assigned to the target group.

After a control plane entity (such as SMF) in the core network configures the configuration information of the target group, the configuration information of the target group is configured to the access network, the access network determines the configuration information of the group-dedicated bearer and/or the group-dedicated logical channel and/or the group-dedicated logical channel group according to the configuration information, and configures the configuration information of the group-dedicated bearer and/or group-dedicated logical channel and/or the group-dedicated logical channel group to the first terminal and/or the at least one first terminal in the target group.

In the solution described above, the control plane entity (such as SMF) in the core network configures a first routing relationship and sends the first routing relationship to the network. Further, the control plane entity in the core network configures the first routing relationship when the target group is established or updated, wherein, updating the target group means that there are terminals newly added or left in the target group.

The following describes each configuration in the above embodiments with specific procedures.

### Configuration 1: the configuration of the group-dedicated connection.

The Group-dedicated connection information may be configured during the process of establishing the group or through the process of establishing the group-dedicated connection. For example, configuring through the process of establishing PDU Session and DRB. For example, for a specific group, assign a specific IP address or Ethernet address, or assign a group-dedicated connection between a specific access network and a core network, or assign a specific DRB or a specific logical channel or a logical channel group. The specific configuration may be configured to the user plane entity of the core network through the control plane entity of the core network, such as the SMF, and to the access network, which determines the configuration information of the DRB or the logical channel according to the configuration information of the SMF and configures the configuration information of the DRB or the logical channel to the terminal.

### Configuration 2: the configuration of the identification information and address information of the group

The identification information and address information of the group may be configured by the same process as the configuration 1, that is, configuring in the process of establishing the group, or through the process of establishing the group dedicated connection.

### Configuration 3: the access network sends the data to the core network according to the received group-dedicated connection

The access network determines the configuration information of the DRB or the logical channel according to the SMF configuration information, and configures the configuration information of the DRB or the logical channel to the terminal.

### Configuration 4: the channel between the access network and the core network may be shared by multiple groups.

Multiple groups share the same channel and are configured through the SMF. For example, the channel information of each group, or the information of groups carried by each channel.

### Configuration 5: sending the data to the core network in the group dedicated channel of the access network and the core network.

Referring to the configuration process of group-specific connection between access network and core network user plane entities in the configuration 1.

### Configuration 6: the configuration of the receiving end information in the first configuration information.

The routing entity of the core network receives the configuration information of the control plane entity of the core network, such as the SMF, and the configuration information contains the relationship among group members.

### Configuration 7: the configuration of the first routing relationship in the first configuration information.

The routing relationship is configured when the group is established or updated, for example, when a member joins or leaves the group. The address allocation may be allocated by the actual routing network entity, and is configured to other network entities or terminals through the SMF, or assigned by the SMF.

### Configuration 8: determining the receiving end according to the group information in the received data, if the data sender of this group is fixed.

The content of configuration 8 may be pre-configured on the terminal side, or configured when the group is established or updated.

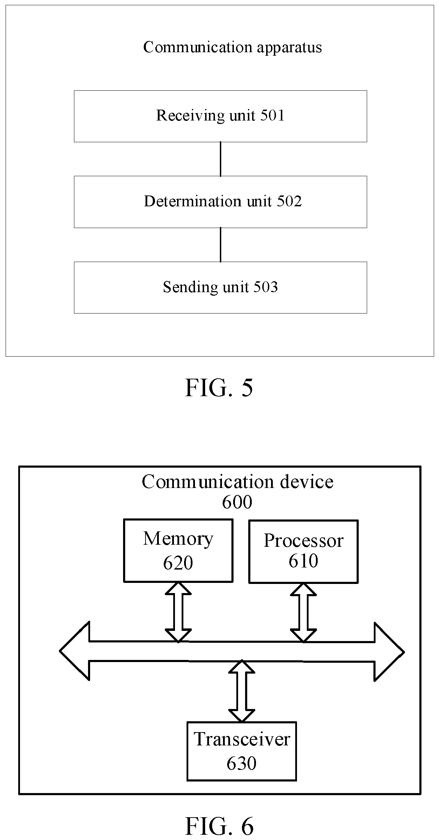

FIG. 5 is a schematic structural composition diagram of a communication apparatus provided by an embodiment of the application. As shown in FIG. 5, the apparatus includes a receiving unit 501, a determination unit 502 and a sending unit 503, the receiving unit 501, configured to receive first data sent by a first terminal; the determination unit 502, configured to determine receiving end information of the first data; and the sending unit 503, configured to determine at least one terminal according to receiving end information of the first data, and send the first data to the at least one terminal.

In an implementation, the first data is transmitted on a dedicated connection corresponding to the at least one terminal; the determination unit 502 is configured to determine the receiving end information of the first data based on the dedicated connection for transmitting the first data.

**In an implementation, the dedicated connection includes at least one of the following: a dedicated PDN connection, a dedicated PDU session, a dedicated QoS flow, a dedicated bearer, a dedicated logical channel and a dedicated logical channel group.**

In an implementation, the first data carries identification information and/or address information corresponding to the at least one terminal; the determination unit 502 is configured to determine the receiving end information of the first data based on the identification information and/or the address information carried in the first data.

In an implementation, the sending unit 503 is configured to send the first data to the at least one terminal on the dedicated connection corresponding to the at least one terminal.

In an implementation, the dedicated connection includes at least one of the following: the dedicated PDN connection, the dedicated PDU session, the dedicated QoS flow, the dedicated bearer, the dedicated logical channel and the dedicated logical channel group.

In an implementation, the sending unit 503 is configured to carry the identification information and/or address information corresponding to the at least one terminal in the first data and send it to the at least one terminal.

In an implementation, the network includes an access network and a core network; the first data transmitted between the terminal and the access network is transmitted on a first dedicated connection, and the first dedicated connection is used for the access network to determine the receiving end information of the first data; and the first data transmitted between the access network and the core network carries the identification information and/or address information corresponding to the at least one terminal, and the identification information and/or address information is used for the core network to determine the receiving end information of the first data.

In an implementation, the network includes the access network and the core network; the first data transmitted between the terminal and the access network carries the identification information and/or address information corresponding to the at least one terminal, and the identification information and/or address information is used for the access network to determine the receiving end information of the first data; and the first data transmitted between the access network and the core network is transmitted on a second dedicated connection, and the second dedicated connection is used for the core network to determine the receiving end information of the first data.

In an implementation, the network includes the access network and the core network; the first data transmitted between the terminal and the access network is transmitted on the first dedicated connection, and the first dedicated connection is used for the access network to determine the receiving end information of the first data; and the first data transmitted between the access network and the core network is transmitted on the second dedicated connection, and the second dedicated connection is used for the core network to determine the receiving end information of the first data.

In an implementation, the network includes the access network and the core network; the first data transmitted between the terminal and the access network carries the identification information and/or address information corresponding to the at least one terminal, and the identification information and/or address information is used for the access network to determine the receiving end information of the first data; and the first data transmitted between the access network and the core network carries the identification information and/or address information corresponding to the at least one terminal, and the identification information and/or address information is used for the core network to determine the receiving end information of the first data.

In an implementation, the network includes the access network and the core network; the first data transmitted between the core network and the access network is transmitted on the second dedicated connection, and the second dedicated connection is used for the access network to determine the receiving end information of the first data; and the first data transmitted between the access network and the at least one terminal carries the identification information and/or address information corresponding to the at least one terminal, and the identification information and/or address information is used by the at least one terminal to determine the receiving end information of the first data.

In an implementation, the network includes the access network and the core network; the first data transmitted between the core network and the access network carries the identification information and/or address information corresponding to the at least one terminal, and the identification information and/or address information is used for the access network to determine the receiving end information of the first data; and the first data transmitted between the access network and the at least one terminal is transmitted on the first dedicated connection, and the first dedicated connection is used for the at least one terminal to determine the receiving end information of the first data.

In an implementation, the network includes the access network and the core network; the first data transmitted between the core network and the access network is transmitted on the second dedicated connection, and the second dedicated connection is used for the access network to determine the receiving end information of the first data; and the first data transmitted between the access network and the at least one terminal is transmitted on the first dedicated connection, and the first dedicated connection is used for the at least one terminal to determine the receiving end information of the first data.

In an implementation, the network includes the access network and the core network; the first data transmitted between the core network and the access network carries the identification information and/or address information corresponding to the at least one terminal, and the identification information and/or address information is used for the access network to determine the receiving end information of the first data; the first data transmitted between the access network and the at least one terminal carries the identification information and/or address information corresponding to the at least one terminal, and the identification information and/or address information is used by the at least one terminal to determine the receiving end information of the first data.

In an implementation, the network includes the access network and the core network; the first data transmitted between the terminal and the core network is transmitted on a third dedicated connection, the third dedicated connection is used for the core network to determine the receiving end information of the first data; or, the first data transmitted between the terminal and the core network carries the identification information and/or address information corresponding to the at least one terminal, wherein the identification information and/or address information is used for the core network to determine the receiving end information of the first data, and the identification information and/or address information is not processed at the access network side.

In an implementation, the network includes the access network and the core network; the first data transmitted between the core network and the at least one terminal is transmitted on the third dedicated connection, and the third dedicated connection is used for the at least one terminal to determine the receiving end information of the first data; or, the first data transmitted between the core network and the at least one terminal carries the identification information and/or address information corresponding to the at least one terminal, wherein the identification information and/or address information are used for the at least one terminal to determine the receiving end information of the first data, and the identification information and/or address information is not processed at the access network side.

In an implementation, the determination unit 502 is further configured to determine routing information of the first data according to the first configuration information.

In an implementation, the first configuration information includes information of each terminal in the at least one terminal.

In an implementation, the first configuration information includes a first routing relationship, and the first routing relationship includes a mapping relationship between a receiving channel and a sending channel of the first data.

In an implementation, the receiving channel of the first data is a channel between the first terminal and the network, and the sending channel of the first data is a channel between the network and the at least one terminal.

In an implementation, the network includes a first network and a second network, wherein the first network is a service network of the first terminal and the second network is a service network of the at least one terminal; for the first network, the receiving channel of the first data is a channel between the first terminal and the first network, and the sending channel of the first data is a channel between the first network and the second network; and for the second network, the receiving channel of the first data is a channel between the first network and the second network, and the sending channel of the first data is a channel between the second network and the at least one terminal.

In an implementation, after receiving the first data, each terminal in the at least one terminal determines the receiving end information of the first data based on at least one of the following information: the identification information of the at least one terminal carried in the first data; the dedicated connection for transmitting the first data; target address information in the first data, wherein the target address information is address information of the at least one terminal; and source address information in the first data, which represents group channel information of the at least one terminal.

In an implementation, after receiving the first data, each terminal in the at least one terminal determines the sending end information of the first data based on at least one of the following information: the source address information of the first data, wherein the source address information is the address information of the first terminal; and the receiving end information in the first data, wherein the sending end of the first data is fixed in the receiving end information.

In an implementation, the dedicated connection is configured during a process of establishing the at least one terminal or the dedicated connection.

In an implementation, the configuration of the dedicated connection includes a dedicated connection configuration between the terminal and access network, and/or between the core network and the access network, and/or between the core networks.

In an implementation, the configuration of the dedicated connection includes at least one of the following information: a dedicated PDN connection, a dedicated PDU session, a dedicated QoS flow, a dedicated bearer, a dedicated logical channel and a dedicated logical channel group.

In an implementation, in the process of establishing the at least one terminal, corresponding identification information and/or address information is also allocated to the at least one terminal.

In an implementation, after configuring the configuration information of at least one terminal, a control plane entity in the core network configures the configuration information of at least one terminal to the access network, and the access network determines the configuration information of the dedicated bearer and/or the dedicated logical channel and/or the dedicated logical channel group according to the configuration information, and configures the configuration information of the dedicated bearer and/or the dedicated logical channel and/or the dedicated logical channel group to the first terminal and/or the at least one terminal.

In an implementation, the control plane entity in the core network configures the first routing relationship and sends the first routing relationship to the network.

In an implementation, the control plane entity in the core network configures the first routing relationship when the at least one terminal is established or updated.

In an implementation, updating the at least one terminal means that at least one terminal is newly added or left.

Those skilled in the art should understand that the relevant description of the communication apparatus of the embodiment of the present application may be understood with reference to the relevant description of the communication method of the embodiment of the present application.

Referring to FIG. 6, FIG.6 is a schematic diagram of structure of a communication device 600 according to an embodiment of the present application. The communication device can be a terminal or a network device. The communication device 600 shown in FIG. 6 includes a processor 610, and the processor 610 can call and run a computer program from a memory to realize the method in the embodiment of the present application.

Optionally, as shown in FIG. 6, the communication device 600 may further include a memory 620. The processor 610 may call and run a computer program from the memory 620 to implement the method in the embodiment of the present application.

The memory 620 may be a separate device independent of the processor 610 or may be integrated in the processor 610.

Optionally, as shown in FIG. 6, the communication device 600 may further include a transceiver 630, and the processor 610 may control the transceiver 630 to communicate with other devices. Specifically, the transceiver 630 may send information or data to other devices or receive information or data sent by other devices.

The transceiver 630 may include a transmitter and a receiver. The transceiver 630 may further include antennas, and the number of antennas may be one or more.

Optionally, the communication device 600 may be a network device of the embodiment of the present application, and the communication device 600 may implement the corresponding processes implemented by the network device in various methods of the embodiment of the present application, which will not be repeated here for brevity.

Optionally, the communication device 600 may be specifically a mobile terminal/terminal device of the embodiment of the present application, and the communication device 600 may implement the corresponding processes implemented by the mobile terminal/terminal device in the various methods of the embodiment of the present application, which will not be repeated here for brevity.

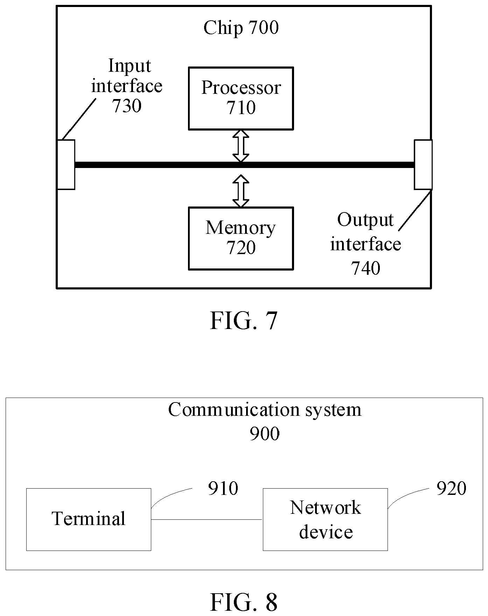

FIG. 7 is a schematic diagram of a structure of a chip of an embodiment of the present application. A chip 700 shown in FIG. 7 includes a processor 710. The processor 710 may call and run a computer program from a memory to implement the method in the embodiment of the present application.

Optionally, as shown in FIG. 7, the chip 700 may further include a memory 720. The processor 710 may call and run a computer program from the memory 720 to implement the method in the embodiment of the present application.

The memory 720 may be a separate device independent of the processor 710 or may be integrated in the processor 710.

Optionally, the chip 700 may further include an input interface 730. The processor 710 may control the input interface 730 to communicate with other devices or chips. Specifically, the processor 710 may acquire information or data sent by other devices or chips.

Optionally, the chip 700 may further include an output interface 740. The processor 710 may control the output interface 740 to communicate with other devices or chips. Specifically, the processor 710 may output information or data to other devices or chips.

Optionally, the chip may be applied in a network device of the embodiment of the present application, and the chip may implement the corresponding processes implemented by the network device in various methods of the embodiment of the present application, which will not be repeated here for brevity.

Optionally, the chip may be applied in a mobile terminal/terminal device of the embodiment of the present application, and the chip may implement the corresponding processes implemented by the mobile terminal/terminal device in the various methods of the embodiment of the present application, which will not be repeated here for brevity.

It should be understood that the chip mentioned in the embodiment of the present application may be referred to as a system-level chip, a system chip, a chip system or a system-on-chip, etc.

FIG. 8 is a schematic block diagram of a communication system 900 provided by an embodiment of the present application. As shown in FIG. 8, the communication system 900 may include a terminal device 910 and a network device 920.

Herein, the terminal device 910 may be configured to implement the corresponding functions implemented by the terminal device in the above-mentioned method, and the network device 920 may be configured to implement the corresponding functions implemented by the network device in the above-mentioned method, which will not be repeated here for brevity.

It should be understood that, the processor in this embodiment of this application may be an integrated circuit chip having a signal processing capability. In an implementation process, the steps of the foregoing method embodiments may be implemented by using an integrated logic circuit of hardware in the processor or instructions in a form of software. The processor may be a general purpose processor, a digital signal processor (Digital Signal Processing, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or perform methods, steps and logical block diagrams disclosed in this embodiment of this application. The general purpose processor may be a microprocessor, or the processor may be any conventional processor or the like. The steps of the method disclosed with reference to this embodiment of this application may be directly implemented by a hardware decoding processor, or may be implemented by a combination of hardware and software modules in the decoding processor. The software modules may be located in a storage medium commonly used in the art, such as a random access memory, a flash memory, a read-only memory, a programmable read-only memory or an electrically erasable programmable memory, or a register. The storage medium is located in the memory, and the processor reads the information in the memory and completes the acts of the above method in combination with its hardware.

It may be understood that, the memory in this embodiment of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through exemplary but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus dynamic random access memory (Direct Rambus RAM, DR RAM). It should be noted that the memory in the systems and methods described in this specification is aimed at including but being not limited to these and any memory of another proper type.

It should be understood that, the foregoing memory is an example for illustration and should not be construed as limiting. For example, optionally, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM), or the like. That is, memories in the embodiments of the present application are intended to include, but are not limited to, these and any other suitable types of memories.

An embodiment of the present application further provides a computer readable storage medium configured to store a computer program.

Optionally, the computer readable storage medium may be applied in a network device of the embodiment of the present application, and the computer program enables the computer to perform the corresponding processes implemented by the network device in various methods of the embodiment of the present application.

Optionally, the computer readable storage medium may be applied in a mobile terminal/terminal device of the embodiment of the present application, and the computer program enables the computer to perform the corresponding processes implemented by the mobile terminal/terminal device in various methods of the embodiment of the present application.

An embodiment of the present application also provides a computer program product including computer program instructions.

Optionally, the computer program product may be applied in a network device of the embodiment of the present application, and the computer program instructions enable the computer to perform the corresponding processes implemented by the network device in various methods of the embodiment of the present application.

Optionally, the computer program product may be applied in a mobile terminal/terminal device of the embodiment of the present application, and the computer program instructions enable the computer to perform the corresponding processes implemented by the mobile terminal/terminal device in various methods according to the embodiment of the present application.

An embodiment of the present application also provides a computer program.

Optionally, the computer program may be applied in a network device of the embodiment of the present application. When the computer program is run on the computer, the computer is enabled to perform the corresponding processes implemented by the network device in various methods of the embodiment of the present application.

Optionally, the computer program may be applied in a mobile terminal/terminal device of the embodiment of the present application. When the computer program is run on the computer, the computer is enabled to perform the corresponding processes implemented by the mobile terminal/terminal device in various methods of the embodiment of the present application.

Those of ordinary skill in the art will recognize that the exemplary elements and algorithm acts described in combination with the embodiments disclosed herein may be implemented in electronic hardware, or a combination of computer software and electronic hardware. Whether these functions are implemented in hardware or software depends on the specific application and design constraints of the technical solution. Skilled artisans may use different methods to implement the described functions in respect to each particular application, but such implementation should not be considered to be beyond the scope of the present application.

Those skilled in the art may clearly understand that for convenience and conciseness of description, the specific working processes of the systems, apparatuses and units described above may refer to the corresponding processes in the method embodiments and will not be described here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division manners in actual implementation, for example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the purpose of the embodiments.

In addition, various functional units in various embodiments of the present application may be integrated in one processing unit, or the various units may be physically present separately, or two or more units may be integrated in one unit.

The functions may be stored in a computer readable storage medium if realized in a form of software functional units and sold or used as a separate product. Based on this understanding, the technical solution of the present application, in essence, or the part contributing to the prior art, or the part of the technical solution, may be embodied in the form of a software product stored in a storage medium, including a number of instructions for causing a computer device (which may be a personal computer, a server, or a network device and the like) to perform all or part of the acts of the method described in various embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

What are described above are merely exemplary embodiments of the present application, but the protection scope of the present application is not limited thereto. Any variation or substitution that may be easily conceived by a person skilled in the art within the technical scope disclosed by the present application shall be included within the protection scope of the present application. Therefore, the protection scope of the present application shall be determined by the protection scope of the claims.

## Claims

1. A communication method, comprising:
receiving, by a network, first data sent by a first terminal, and determining receiving end information of the first data; and
determining, by the network, at least one terminal according to the receiving end information of the first data, and sending the first data to the at least one terminal.

2. The method of claim 1, wherein the first data is transmitted on a dedicated connection corresponding to the at least one terminal; and
the determining the receiving end information of the first data comprises:
determining the receiving end information of the first data based on the dedicated connection for transmitting the first data.

3. The method of claim 2, wherein the dedicated connection comprises at least one of:
a dedicated public data network (PDN) connection, a dedicated protocol data unit (PDU) session, a dedicated QoS flow, a dedicated bearer, a dedicated logical channel and a dedicated logical channel group.

4. The method of claim 1, wherein the first data carries identification information and/or address information corresponding to the at least one terminal;
the determining the receiving end information of the first data comprises:
determining the receiving end information of the first data based on the identification information and/or the address information carried in the first data.

5. The method of claim 1, wherein the sending the first data to the at least one terminal comprises:
sending the first data to the at least one terminal on the dedicated connection corresponding to the at least one terminal.

6. The method of claim 5, wherein the dedicated connection comprises at least one of:
a dedicated PDN connection, a dedicated PDU session, a dedicated QoS flow, a dedicated bearer, a dedicated logical channel and a dedicated logical channel group.

7. The method of claim 1, wherein the sending the first data to the at least one terminal comprises:
sending the first data carrying the identification information and/or address information corresponding to the at least one terminal to the at least one terminal.

8. The method of any one of claims 2 to 7, wherein the network comprises an access network and a core network;
the first data transmitted between the terminal and the access network is transmitted on a first dedicated connection, and the first dedicated connection is used for the access network to determine the receiving end information of the first data; and
the first data transmitted between the access network and the core network carries identification information and/or address information corresponding to the at least one terminal, and the identification information and/or address information is used for the core network to determine the receiving end information of the first data.

9. The method of any one of claims 2 to 7, wherein the network comprises an access network and a core network;
the first data transmitted between the terminal and the access network carries the identification information and/or address information corresponding to the at least one terminal, and the identification information and/or address information is used for the access network to determine the receiving end information of the first data; and
the first data transmitted between the access network and the core network is transmitted on a second dedicated connection, and the second dedicated connection is used for the core network to determine the receiving end information of the first data.

10. The method of any one of claims 2 to 7, wherein the network comprises an access network and a core network;
the first data transmitted between the terminal and the access network is transmitted on a first dedicated connection, and the first dedicated connection is used for the access network to determine the receiving end information of the first data; and
the first data transmitted between the access network and the core network is transmitted on a second dedicated connection, and the second dedicated connection is used for the core network to determine the receiving end information of the first data.

11. The method of any one of claims 2 to 7, wherein the network comprises an access network and a core network;
the first data transmitted between the terminal and the access network carries the identification information and/or address information corresponding to the at least one terminal, and the identification information and/or address information is used for the access network to determine the receiving end information of the first data; and
the first data transmitted between the access network and the core network carries identification information and/or address information corresponding to the at least one terminal, and the identification information and/or address information is used for the core network to determine the receiving end information of the first data.

12. The method of any one of claims 2 to 7, wherein the network comprises an access network and a core network;
the first data transmitted between the core network and the access network is transmitted on a second dedicated connection, and the second dedicated connection is used for the access network to determine the receiving end information of the first data; and
the first data transmitted between the access network and the at least one terminal carries identification information and/or address information corresponding to the at least one terminal, and the identification information and/or address information is used by the at least one terminal to determine the receiving end information of the first data.

13. The method of any one of claims 2 to 7, wherein the network comprises an access network and a core network;
the first data transmitted between the core network and the access network carries the identification information and/or address information corresponding to the at least one terminal, and the identification information and/or address information is used for the access network to determine the receiving end information of the first data; and
the first data transmitted between the access network and the at least one terminal is transmitted on the first dedicated connection, and the first dedicated connection is used for the at least one terminal to determine the receiving end information of the first data.

14. The method of any one of claims 2 to 7, wherein the network comprises an access network and a core network;
the first data transmitted between the core network and the access network is transmitted on a second dedicated connection, and the second dedicated connection is used for the access network to determine the receiving end information of the first data; and
the first data transmitted between the access network and the at least one terminal is transmitted on a first dedicated connection, and the first dedicated connection is used for the at least one terminal to determine the receiving end information of the first data.

15. The method of any one of claims 2 to 7, wherein the network comprises an access network and a core network;
the first data transmitted between the core network and the access network carries the identification information and/or address information corresponding to the at least one terminal, and the identification information and/or address information is used for the access network to determine the receiving end information of the first data; and
the first data transmitted between the access network and the at least one terminal carries the identification information and/or address information corresponding to the at least one terminal, and the identification information and/or address information is used by the at least one terminal to determine the receiving end information of the first data.

16. The method of any one of claims 2 to 7, wherein the network comprises an access network and a core network;
the first data transmitted between the terminal and the core network is transmitted on a third dedicated connection, and the third dedicated connection is used for the core network to determine the receiving end information of the first data; or,
the first data transmitted between the terminal and the core network carries the identification information and/or address information corresponding to the at least one terminal, wherein the identification information and/or address information is used for the core network to determine the receiving end information of the first data, and the identification information and/or address information is not processed at the access network side.

17. The method of any one of claims 2 to 7, wherein the network comprises an access network and a core network;
the first data transmitted between the core network and the at least one terminal is transmitted on a third dedicated connection, and the third dedicated connection is used for the at least one terminal to determine the receiving end information of the first data; or,
the first data transmitted between the core network and the at least one terminal carries the identification information and/or address information corresponding to the at least one terminal, wherein the identification information and/or address information is used for the at least one terminal to determine the receiving end information of the first data, and the identification information and/or address information is not processed at the access network side.

18. The method of any one of claims 1 to 17, wherein the method further comprises:
determining, by the network, routing information of the first data according to first configuration information.

19. The method of claim 18, wherein the first configuration information comprises information of each terminal in the at least one terminal.

20. The method of claim 18, wherein the first configuration information comprises a first routing relationship, and the first routing relationship comprises a mapping relationship between a receiving channel and a sending channel of the first data.

21. The method of claim 20, wherein the receiving channel of the first data is a channel between the first terminal and the network, and the sending channel of the first data is a channel between the network and the at least one terminal.

22. The method of claim 20, wherein the network comprises a first network and a second network, wherein the first network is a service network of the first terminal and the second network is a service network of the at least one terminal;
for the first network, the receiving channel of the first data is a channel between the first terminal and the first network, and the sending channel of the first data is a channel between the first network and the second network; and
for the second network, the receiving channel of the first data is a channel between the first network and the second network, and the sending channel of the first data is a channel between the second network and the at least one terminal.

23. The method of any one of claims 1 to 22, wherein after receiving the first data, each terminal in the at least one terminal determines the receiving end information of the first data based on at least one of the following information:
identification information of the at least one terminal carried in the first data;
a dedicated connection for transmitting the first data;
target address information in the first data, wherein the target address information is address information of the at least one terminal; and
source address information in the first data, which represents group channel information of the at least one terminal.

24. The method of any one of claims 1 to 13, wherein after receiving the first data, each terminal in the at least one terminal determines the sending end information of the first data based on at least one of the following information:
source address information of the first data, wherein the source address information is address information of the first terminal; and
the receiving end information in the first data, wherein the sending end of the first data is fixed in the receiving end information.

25. The method of any one of claims 2-3, 5-6, 8-10, 12-14, 16-17, and 23, wherein the dedicated connection is configured during a process of establishing the at least one terminal or the dedicated connection.

26. The method of claim 25, wherein the configuration of the dedicated connection comprises a dedicated connection configuration between the terminal and the access network, and/or between the core network and the access network, and/or between the core networks.

27. The method of claim 25 or 26, wherein the configuration of the dedicated connection includes at least one of the following information: the dedicated PDN connection, the dedicated PDU session, the dedicated QoS flow, the dedicated bearer, the dedicated logical channel and the dedicated logical channel group.

28. The method of any one of claims 25 to 27, wherein in the process of establishing the at least one terminal, corresponding identification information and/or address information is further allocated to the at least one terminal.

29. The method of any one of claims 25 to 28, wherein a control plane entity in the core network configures configuration information of the at least one terminal to the access network, and the access network determines the configuration information of the dedicated bearer and/or the dedicated logical channel and/or the dedicated logical channel group according to the configuration information

30. The method of any one of claims 20 to 22, wherein a control plane entity in the core network configures the first routing relationship and sends the first routing relationship to the network.

31. The method of claim 30, wherein the control plane entity in the core network configures the first routing relationship when the at least one terminal is established or updated.

32. The method of claim 31, wherein updating the at least one terminal means that a terminal is newly added or left in the at least one terminal.

33. A communication apparatus, comprising:
a receiving unit, configured to receive first data sent by a first terminal;
a determination unit, configured to determine receiving end information of the first data; and
a sending unit, configured to determine at least one terminal according to the receiving end information of the first data, and send the first data to the at least one terminal.

34. The apparatus of claim 33, wherein the first data is transmitted on a dedicated connection corresponding to the at least one terminal;
the determination unit is configured to determine the receiving end information of the first data based on the dedicated connection for transmitting the first data.

35. The apparatus of claim 34, wherein the dedicated connection comprises at least one of:
a dedicated PDN connection, a dedicated PDU session, a dedicated QoS flow, a dedicated bearer, a dedicated logical channel and a dedicated logical channel group.

36. The apparatus of claim 33, wherein the first data carries identification information and/or address information corresponding to the at least one terminal;
the determination unit is configured to determine the receiving end information of the first data based on the identification information and/or the address information carried in the first data.

37. The apparatus of claim 33, wherein the sending unit is configured to send the first data to the at least one terminal on a dedicated connection corresponding to the at least one terminal.

38. The apparatus of claim 37, wherein the dedicated connection comprises at least one of:
a dedicated PDN connection, a dedicated PDU session, a dedicated QoS flow, a dedicated bearer, a dedicated logical channel and a dedicated logical channel group.

39. The apparatus of claim 33, wherein the sending unit is configured to send the identification information and/or address information corresponding to the at least one terminal carried in the first data to the at least one terminal.

40. The apparatus of any one of claims 34 to 39, wherein the network comprises an access network and a core network;
the first data transmitted between the terminal and the access network is transmitted on a first dedicated connection, and the first dedicated connection is used for the access network to determine the receiving end information of the first data; and
the first data transmitted between the access network and the core network carries the identification information and/or address information corresponding to the at least one terminal, and the identification information and/or address information is used for the core network to determine the receiving end information of the first data.

41. The apparatus of any one of claims 34 to 39, wherein the network comprises an access network and a core network;
the first data transmitted between the terminal and the access network carries identification information and/or address information corresponding to the at least one terminal, and the identification information and/or address information is used for the access network to determine the receiving end information of the first data; and
the first data transmitted between the access network and the core network is transmitted on a second dedicated connection, and the second dedicated connection is used for the core network to determine the receiving end information of the first data.

42. The apparatus of any one of claims 34 to 39, wherein the network comprises an access network and a core network;
the first data transmitted between the terminal and the access network is transmitted over a first dedicated connection, and the first dedicated connection is used for the access network to determine the receiving end information of the first data; and
the first data transmitted between the access network and the core network is transmitted on a second dedicated connection, and the second dedicated connection is used for the core network to determine the receiving end information of the first data.

43. The apparatus of any one of claims 34 to 39, wherein the network comprises an access network and a core network;
the first data transmitted between the terminal and the access network carries the identification information and/or address information corresponding to the at least one terminal, and the identification information and/or address information is used for the access network to determine the receiving end information of the first data; and
the first data transmitted between the access network and the core network carries the identification information and/or address information corresponding to the at least one terminal, and the identification information and/or address information is used for the core network to determine the receiving end information of the first data.

44. The apparatus of any one of claims 34 to 39, wherein the network comprises the access network and the core network;
the first data transmitted between the core network and the access network is transmitted on a second dedicated connection, and the second dedicated connection is used for the access network to determine the receiving end information of the first data; and
the first data transmitted between the access network and the at least one terminal carries the identification information and/or address information corresponding to the at least one terminal, and the identification information and/or address information is used by the at least one terminal to determine the receiving end information of the first data.

45. The apparatus of any one of claims 34 to 39, wherein the network comprises an access network and a core network;
the first data transmitted between the core network and the access network carries the identification information and/or address information corresponding to the at least one terminal, and the identification information and/or address information is used for the access network to determine the receiving end information of the first data; and
the first data transmitted between the access network and the at least one terminal is transmitted on a first dedicated connection, and the first dedicated connection is used for the at least one terminal to determine the receiving end information of the first data.

46. The apparatus of any one of claims 34 to 39, wherein the network comprises an access network and a core network;
the first data transmitted between the core network and the access network is transmitted on a second dedicated connection, and the second dedicated connection is used for the access network to determine the receiving end information of the first data; and
the first data transmitted between the access network and the at least one terminal is transmitted on a first dedicated connection, and the first dedicated connection is used for the at least one terminal to determine the receiving end information of the first data.

47. The apparatus of any one of claims 34 to 39, wherein the network comprises an access network and a core network;
the first data transmitted between the core network and the access network carries the identification information and/or address information corresponding to the at least one terminal, and the identification information and/or address information is used for the access network to determine the receiving end information of the first data; and
the first data transmitted between the access network and the at least one terminal carries the identification information and/or address information corresponding to the at least one terminal, and the identification information and/or address information is used by the at least one terminal to determine the receiving end information of the first data.

48. The apparatus of any one of claims 34 to 39, wherein the network comprises an access network and a core network;
the first data transmitted between the terminal and the core network is transmitted on a third dedicated connection, and the third dedicated connection is used for the core network to determine the receiving end information of the first data; or,
the first data transmitted between the terminal and the core network carries the identification information and/or address information corresponding to the at least one terminal, wherein the identification information and/or address information is used for the core network to determine the receiving end information of the first data, and the identification information and/or address information is not processed at the access network side.

49. The apparatus of any one of claims 34 to 39, wherein the network comprises an access network and a core network;
the first data transmitted between the core network and the at least one terminal is transmitted on a third dedicated connection, and the third dedicated connection is used for the at least one terminal to determine the receiving end information of the first data; or,
the first data transmitted between the core network and the at least one terminal carries the identification information and/or address information corresponding to the at least one terminal, wherein the identification information and/or address information is used for the at least one terminal to determine the receiving end information of the first data, and the identification information and/or address information is not processed at the access network side.

50. The apparatus of any one of claims 33 to 49, wherein the determination unit is further configured to determine routing information of the first data according to first configuration information.

51. The apparatus of claim 50, wherein the first configuration information comprises information of each terminal in the at least one terminal.

52. The apparatus of claim 50, wherein the first configuration information comprises a first routing relationship, and the first routing relationship comprises a mapping relationship between a receiving channel and a sending channel of the first data.

53. The apparatus of claim 52, wherein the receiving channel of the first data is a channel between the first terminal and the network, and the sending channel of the first data is a channel between the network and the at least one terminal.

54. The apparatus of claim 52, wherein the network comprises a first network and a second network, wherein the first network is a service network of the first terminal and the second network is a service network of the at least one terminal;
for the first network, the receiving channel of the first data is a channel between the first terminal and the first network, and the sending channel of the first data is a channel between the first network and the second network; and
for the second network, the receiving channel of the first data is a channel between the first network and the second network, and the sending channel of the first data is a channel between the second network and the at least one terminal.

55. The apparatus of any one of claims 33 to 54, wherein after receiving the first data, each terminal in the at least one terminal determines the receiving end information of the first data based on at least one of the following information:
the identification information of the at least one terminal carried in the first data;
the dedicated connection for transmitting the first data;
target address information in the first data, wherein the target address information is address information of the at least one terminal; and
source address information in the first data, which represents group channel information of the at least one terminal.

56. The apparatus of any one of claims 33 to 54, wherein after receiving the first data, each terminal in the at least one terminal determines the sending end information of the first data based on at least one of the following information:
the source address information of the first data, wherein the source address information is address information of the first terminal; and
the receiving end information in the first data, wherein the sending end of the first data is fixed in the receiving end information.

57. The apparatus of any one of claims 34-35, 37-38, 40-42, 44-46, 48-49 and 55, wherein the dedicated connection is configured during a process of establishing the at least one terminal or the dedicated connection.

58. The apparatus of claim 57, wherein the configuration of the dedicated connection comprises a dedicated connection configuration between the terminal and the access network and/or a dedicated connection configuration between the core network and the access network.

59. The apparatus according to claim 57 or 58, wherein configuration of the dedicated connection comprises at least one of the following information: the dedicated PDN connection, the dedicated PDU session, the dedicated QoS flow, the dedicated bearer, the dedicated logical channel, and the dedicated logical channel group.

60. The apparatus of any one of claims 57 to 59, wherein in the process of establishing the at least one terminal, corresponding identification information and/or address information are further allocated to the at least one terminal.

61. The apparatus of any one of claims 57 to 60, wherein the control plane entity in the core network configures the configuration information of the at least one terminal to the access network, and the access network determines the configuration information of the dedicated bearer and/or the dedicated logical channel and/or the dedicated logical channel group according to the configuration information, and configures the configuration information of the dedicated bearer and/or the dedicated logical channel and/or the dedicated logical channel group to the first terminal and/or the at least one terminal.

62. The apparatus of any one of claims 52 to 54, wherein the control plane entity in the core network configures the first routing relationship and sends the first routing relationship to the network.

63. The apparatus of claim 62, wherein the control plane entity in the core network configures the first routing relationship when the at least one terminal is established or updated.

64. The apparatus of claim 63, wherein updating the at least one terminal means that a terminal is newly added or left in the at least one terminal.

65. A communication device, comprising a processor and a memory, wherein the memory is configured to store a computer program and the processor is configured to call and execute the computer program stored in the memory to perform the method according to any one of claims 1-32.

66. A chip comprising: a processor configured to call and run a computer program from a memory, wherein a device disposed with the chip executes the method according to any one of claims 1 to 32.

67. A computer readable storage medium storing a computer program, wherein the computer program enables a computer to perform the method according to any one of claims 1 to 32.

68. A computer program product comprising computer program instructions, wherein the computer program instructions enable a computer to execute the method according to any one of claims 1 to 32.

69. A computer program, wherein the computer program enables a computer to execute the method according to any one of claims 1 to 32.
